# EUROPÄISCHE PATENTSCHRIFT

(11) **EP 3 782 787 B1**
(45) Veröffentlichungstag und Bekanntmachung des Hinweises auf die Patenterteilung: **10.01.2024**
(21) Anmeldenummer: 20184926.2
(22) Anmeldetag: 09.07.2020
(51) Int. Cl.: B29B 7/82, B29B 7/28, B29B 7/74, B29B 7/18

(54) **VERFAHREN UND VORRICHTUNG ZUM HERSTELLEN EINER KAUTSCHUKMISCHUNG, SOWIE DARAUF BEZOGENE VERWENDUNG VON WÄRMESTRAHLUNG ZUM ERWÄRMEN VON KAUTSCHUKMISCHUNGSBESTANDTEILEN**
METHOD AND DEVICE FOR PRODUCING A RUBBER MIXTURE, AND RELATED USE OF THERMAL RADIATION FOR HEATING RUBBER MIXTURE COMPONENTS
PROCÉDÉ ET DISPOSITIF DE FABRICATION D'UN MÉLANGE DE CAOUTCHOUC, AINSI QUE L'UTILISATION ASSOCIÉE DE LA RADIATION THERMIQUE POUR CHAUFFER LES INGRÉDIENTS D'UN MÉLANGE DE CAOUTCHOUC

(30) Priorität: 19.08.2019 DE 102019212384
(43) Veröffentlichungstag der Anmeldung: 24.02.2021
(73) Patentinhaber: Continental Reifen Deutschland GmbH, 30165 Hannover (DE)
(72) Erfinder: Sharifi, Monir, 30419 Hannover (DE); Wortmann, Christopher, 30419 Hannover (DE)
(74) Vertreter: Continental Corporation

(56) Entgegenhaltungen:
- EP-A1- 3 100 838
- WO-A1-2018/225353
- CN-U- 205 889 615
- CN-U- 206 796 265
- DE-A1-102017 207 183
- JP-A- S5 919 525
- BOGUN ET AL: "Untersuchungen zur kontinuierlichen Herstellung von Kautschukmischungen basierend auf Rubber/Filler-Composites am Doppelschneckenextruder", INTERNET CITATION, 29. September 2005 (2005-09-29), Seiten 7-32, XP002763350, Gefunden im Internet: URL:https://sundoc.bibliothek.uni-halle.de /diss-online/05/06H001/t3.pdf [gefunden am 2016-10-24]

## Beschreibung

Die Erfindung betrifft ein Verfahren zum Herstellen einer Kautschukmischung. Die Erfindung betrifft auch eine Vorrichtung zur Durchführung des Verfahrens sowie die Verwendung von Wärmestrahlung zum Erwärmen von Kautschukmischungsbestandteilen. In der Kautschukindustrie werden verschiedene Verfahren zur Herstellung von industriellen Gummiprodukten wie beispielsweise Fahrzeugreifen oder Transportbändern durchgeführt. Zur Herstellung dieser Gummiprodukte muss eine Kautschukmischung angemischt, anschließend in eine entsprechende Form gebracht und in einem finalen Schritt, der Vulkanisation, zu einem industriellen Gummiprodukt verarbeitet werden. Einer der wichtigeren Herstellungsschritte ist dabei das Mischen der Kautschukmischungsbestandteile zu einer Kautschukmischung. Bei dem Mischverfahren zur Herstellung einer solchen Kautschukmischung ist es wichtig, dass die einzelnen Kautschukmischungsbestandteile sich miteinander vermischen und insbesondere möglichst homogen vermischt werden. Kautschukmischungsbestandteile, welche sich nicht mischen oder nicht ausreichend homogen vermischt werden, führen zu Kautschukmischungen oder Vulkanisaten mit schlechteren chemischen und physikalischen Eigenschaften.

Die DE 102017207183A1 betrifft eine Mischvorrichtung zum Mischen von Kautschukmischungen, umfassend eine obere zwei erste Mischrotoren umfassende Mischkammer, welche von einem Oberkammergehäuse, einer ersten Einfüllöffnung und einer ersten Auswurföffnung begrenzt wird und in der eine Temperatur T vorliegt, eine untere zwei zweite Mischrotoren umfassende Mischkammer, welche von einem Unterkammergehäuse, einer zweiten Einfüllöffnung und einer zweiten Auswurföffnung begrenzt wird, wobei die Mischvorrichtung ein zwischen der oberen und der unteren Mischkammer installiertes Walzwerk mit zwei koaxialen und entgegengesetzt drehenden Walzen aufweist, wobei die zwei Walzen so verschoben werden können, dass ein verstellbarer Walzenspalt zwischen den zwei Walzen ausgebildet werden kann, und die Walzen so angeordnet sind, dass sich die Mittelparallele der Rotationsachsen der zwei zweiten Mischrotoren in der unteren Mischkammer in Lotrichtung unter dem geöffneten Walzenspalt befindet. Ebenfalls beschrieben ist ein Verfahren zur Herstellung einer Kautschukfertigmischung.

Die EP 3100838A1 betrifft ein Verfahren zur Herstellung einer Gummimischung mit folgenden Schritten:
a) Hinzugabe von Rohmaterialien für die Gummimischung in den oberen Mischer des Tandemmischers, wobei die Rohmaterialien zumindestens Silica-Material umfassen,
b) Durchführung einer ersten Mischstufe mit den Rohmaterialien im oberen Mischer des Tandemmischers, wobei beim Mischvorgang eine Zielmischtemperatur erreicht wird und für den Mischvorgang eine Mindestmischzeit vorgegeben wird, wobei mit dem Mischvorgang eine Silanisierung der Gummimischung initiiert wird,
c) Überführung der Gummimischung von dem oberen Mischer in eine Zwischenkammer mit einer Heizvorrichtung und wärmeisolierten Kammerwänden, wobei die Zwischenkammer unterhalb vom oberen Mischer angeordnet ist,
d) Zwischenlagern der Gummimischung in der Zwischenkammer über eine vorgegebene Lagerungszeit, wobei die Silanisierung der Gummimischung in der Zwischenkammer fortgeführt wird und
e) Überführung der Gummimischung von der Zwischenkammer in den unteren Mischer, wobei der untere Mischer unterhalb der Zwischenkammer angeordnet ist.

Die Aufgabe, die der Erfindung zugrunde liegt, besteht darin, ein Verfahren und eine darauf bezogene Vorrichtung zur Herstellung einer Kautschukfertigmischung bereitzustellen, sodass die Kautschukfertigmischung oder das aus der Kautschukfertigmischung resultierende Vulkanisat bessere Eigenschaften aufweist im Vergleich zu aus dem Stand der Technik bekannten Verfahren. Dies sollte insbesondere mit möglichst wenigen Herstellschritten erreicht werden.

Gelöst wird diese Aufgabe erfindungsgemäß durch ein Verfahren nach Anspruch 1 zum Herstellen einer Kautschukmischung, umfassend die folgenden Schritte:
A) Bereitstellen oder Herstellen von Kautschukmischungsbestandteilen, wobei die Kautschukmischungsbestandteile zumindest ein erstes und ein zweites Kautschukmischungsbestandteil aufweisen,
B) Transferieren zumindest des in Schritt A) her- oder bereitgestellten ersten Kautschukmischungsbestandteils in einen ersten Mischer zum Herstellen einer Kautschukmischung,
C) Mischen des in Schritt B) in den ersten Mischer transferierten ersten Kautschukmischungsbestandteils,
D) Erwärmen des in Schritt A) her- oder bereitgestellten zweiten Kautschukmischungsbestandteils mittels Wärmestrahlung, sodass das zweite Kautschukmischungsbestandteil eine Temperatur T₁ im Bereich von 40 °C bis 200 °C aufweist,
E) Transferieren des in Schritt D) erwärmten zweiten Kautschukmischungsbestandteils mit einer Temperatur im Temperaturbereich T₂ oberhalb von 25°C in den ersten Mischer oder in einen zweiten Mischer zum Herstellen einer Kautschukmischung und
F) Mischen des in Schritt E) transferierten zweiten Kautschukmischungsbestandteils mit zumindest dem ersten Kautschukmischungsbestandteil
   - in dem ersten Mischer
      oder
   - in dem zweiten Mischer, nachdem das im ersten Mischer gemischte erste Kautschukbestandteil in den zweiten Mischer transferiert wurde, sodass eine Kautschukmischung resultiert.

Erfindungsgemäss wurde herausgefunden, dass das Vermischen eines in einem Mischer vorliegenden Kautschukmischungsbestandteils mit einem danach hinzugegeben zweiten Kautschukmischungsbestandteil verbessert werden kann, indem das zweite Kautschukmischungsbestandteil vor dem Hinzufügen zum ersten Kautschukmischungsbestandteil schonend mittels Wärmestrahlung erwärmt wird. Hierbei kann nicht nur erreicht werden, dass sich das erste und das zweite Kautschukmischungsbestandteil überhaupt miteinander mischen, d.h. nicht ein 2-Phasensystem bilden, sondern auch das Mischen der beiden Kautschukmischungsbestandteile selbst beschleunigt wird. An der in einem erfindungsgemäßen Verfahren resultierenden Kautschukmischung kann die homogener Durchmischung insbesondere durch Messung der chemischen Zusammensetzung an verschiedenen Punkten der resultierenden Kautschukmischung nachgewiesen werden. Insbesondere vorteilhaft für ein schnelles und homogenes Vermischen bei einem erfindungsgemäßen Verfahren ist, wenn der Temperaturbereich T₂ so gewählt wird, dass der zweite Kautschukmischungsbestandteil beim Mischen in Schritt D) eine ähnliche Mooney-Viskosität aufweist wie der erste bereits angemischte Kautschukmischungsbestandteil. Der Temperaturbereich T₂ liegt erfindungsgemäß oberhalb von 25 °C.

Pro Zykluszeit eines erfindungsgemäßen Verfahrens zur Herstellung einer Kautschukmischung können somit zwischen 10 bis 30 % der Zykluszeit im Vergleich zu bekannten Verfahren gespart werden. Dies gilt insbesondere, wenn es erfindungsmäßen Verfahren in einem Tandemmischer durchgeführt wird, d.h. der vorstehend beschriebene erste Mischer oberhalb des zweiten Mischers angeordnet ist und die Kautschukmischung aus dem ersten Mischer unmittelbar in den zweiten Mischer fallen oder überführt kann. Insbesondere vorteilhaft ist es, dass im Rahmen der vorliegenden Erfindung herausgefunden wurde, dass durch die Einwirkung von Wärmestrahlung, wie beispielsweise IR-Strahlung, Kautschukmischungsbestandteile im Vergleich zu anderen Arten der Wärmeübertragung schonender erwärmt werden können, d.h. dass sich unter anderem beim Erwärmen die Polymerketten der Kautschuke oder anderer langkettigen eingesetzten Molekülen nicht verkürzen. Eine solche Verkürzung kann beispielsweise die Gel-Permeations-Chromatographie (GPC) festgestellt werden, siehe hierzu beispielsweise Absatz [0024] des Dokuments EP 0923619 A1.

Bevorzugt ist daher ein Verfahren wie vorstehend beschrieben oder wie vorstehend als bevorzugt beschrieben, wobei der Temperaturbereich T₂ in Schritt D) so gewählt wird, dass das zweite Kautschukmischungsbestandteil beim Mischen in Schritt F) eine Mooney-Viskosität aufweist, welche nicht um mehr als 20 MU von der Mooney-Viskosität (ML 1 +3, 100°C) des ersten bereits gemischten Kautschukmischungsbestandteils in Schritt F) abweicht, bevorzugt nicht um mehr als 10 MU von der Mooney-Viskosität (ML 1 +3, 100°C) des ersten bereits gemischten Kautschukmischungsbestandteils in Schritt F) abweicht, besonders bevorzugt nicht um mehr als 5 MU von der Mooney-Viskosität (ML 1 +3, 100°C) des ersten bereits gemischten Kautschukmischungsbestandteils in Schritt F) abweicht.

Im Rahmen der vorliegenden Erfindung umfasst der Ausdruck "Kautschukmischungsbestandteilen" insbesondere
- einen Kautschukbestandteil, d.h. einen Kautschuk oder eine Mischung von Kautschuken, und
- ein oder mehrere Harze sowie
- Mischungen eines Kautschukbestandteils mit
   - Füllstoffen, wie beispielsweise Ruß und Silica,
   - Silanen,
   - Weichmachern
      und/oder
   - Harzen.

Im Rahmen der vorliegenden Erfindung umfasst der Ausdruck "Kautschukmischung" insbesondere eine Kautschukgrund- und eine Kautschukfertigmischung. Zur Herstellung letzterer in einem erfindungsgemäßen Verfahren werden zeitlich vor dem Schritt F) Vulkanisationsmittel in den zweiten Mischer transferiert.

Im Rahmen der vorliegenden Erfindung werden die Ausdrücke "Transferieren eines Kautschukmischungsbestandteils" und "Zuführen eines Kautschukmischungsbestandteils" synonym verwendet.

Bevorzugt ist ein Verfahren wie vorstehend beschrieben oder wie vorstehend als bevorzugt beschrieben, wobei das Mischen in Schritt F) in einem zweiten Mischer durchgeführt wird und der Schritt F) sich wie folgt zusammensetzt:
F1) Transferieren des im ersten Mischer gemischten ersten Kautschukbestandteils in den zweiten Mischer,
F2) Mischen des in Schritt E) transferierten zweiten Kautschukmischungsbestandteils mit zumindest dem ersten Kautschukmischungsbestandteil in dem zweiten Mischer,
sodass eine Kautschukmischung resultiert, wobei der erste Mischer bevorzugt der Obermischer eines Tandemmischers und der zweite Mischer der Untermischer des Tandemmischers ist.

Bevorzugt ist ein Verfahren wie vorstehend beschrieben oder wie vorstehend als bevorzugt beschrieben, wobei das Mischen in Schritt F) in dem ersten Mischer durchgeführt wird und der Schritt F) sich wie folgt zusammensetzt:
F) Mischen des in Schritt E) transferierten zweiten Kautschukmischungsbestandteils mit zumindest dem ersten Kautschukmischungsbestandteil in dem ersten Mischer, sodass eine Kautschukmischung resultiert, wobei der erste Mischer bevorzugt der Obermischer eines Tandemmischers ist.

Bevorzugt ist ein Verfahren wie vorstehend beschrieben oder wie vorstehend als bevorzugt beschrieben, wobei die Wärmestrahlung Strahlung in einem Wellenlängenbereich von 700 nm bis 50 000 nm ist, bevorzugt in einem Wellenlängenbereich von 1000 nm bis 10 000 nm.

Ein Vorteil des vorstehend beschriebenen Aspekts der vorliegenden Erfindung ist, dass Wärmestrahlung mit den vorstehend beschriebenen Wellenlängen besonders wenige Polymerketten beim Erwärmen zerstören im Vergleich zur Erwärmung mittels Wärmestrahlung mit anderen Wellenlängen.

Bevorzugt ist ein Verfahren wie vorstehend beschrieben oder wie vorstehend als bevorzugt beschrieben, wobei das Erwärmen in Schritt C) mittels eines IR-Strahlers durchgeführt wird. Beispiele für solche IR-Strahler sind beispielsweise die Produkte "IP 65 InfrarotStrahler" oder "Infrarot Spiralstrahler" oder "Duo- und Quattrostrahler" der Firma "Heraus".

Ein Vorteil des vorstehend beschriebenen Aspekts der vorliegenden Erfindung ist, dass die IR-Strahler, insbesondere die vorstehend genannten IR-Strahler, sich besonders gut für eine schonende Erwärmung der Kautschukmischungsbestandteile eignen im Vergleich zu anderen Heizelementen mit Wärmestrahlung. IR-Strahler, insbesondere die vorstehend genannten IR-Strahler, lassen sich zudem problemlos in den momentanen Prozessablauf integrieren.

Bevorzugt ist ein Verfahren wie vorstehend beschrieben oder wie vorstehend als bevorzugt beschrieben, wobei das in Schritt B) transferierte erste Kautschukmischungsbestandteil eine Temperatur im Bereich von 10 °C bis 35 °C aufweist und/oder eine Mooney-Viskosität (ML+3, 100°C) im Bereich von 5 bis 150 MU aufweist, bevorzugt im Bereich von 50 bis 120 MU.

Ein Vorteil des vorstehend beschriebenen Aspekts der vorliegenden Erfindung ist, dass vorstehend beschriebene erst wie vorstehend oder nachstehend beschrieben e Kautschukmischungsbestandteile sich besonders gut in einem erfindungsgemäßen Verfahren mit einem zweiten Kautschukmischungsbestandteile vermischen lassen.

Bevorzugt ist ein Verfahren wie vorstehend beschrieben oder wie vorstehend als bevorzugt beschrieben, wobei in Schritt C) das erste Kautschukmischungsbestandteil mit weiteren Kautschukmischungsbestandteilen gemischt wird und/oder in Schritt F) das erste und das zweite Kautschukmischungsbestandteile mit zusätzlichen und/oder mit den weiteren Kautschukmischungsbestandteilen gemischt wird.

Solche zusätzlichen und/oder weiteren Kautschukmischungsbestandteilen sind beispielsweise Füllstoffe, wie beispielsweise Russe oder Kieselsäure, Silane, Harze, Weichmachern, Vulkanisationsbeschleuniger oder dem Fachmann bekannte Zusatzstoffe zu Kautschukmischungsherstellung, wobei letztere insbesondere
- Alterungsschutzmittel, wie sie beispielsweise aus J. Schnetger, Lexikon der Kautschuktechnik, 2. Auflage, Hüthig Buch Verlag, Heidelberg, 1991, S. 42-48 bekannt sind,
- Aktivatoren, wie z. B. Zinkoxid und Fettsäuren (z. B. Stearinsäure) und/oder sonstige Aktivatoren, wie Zinkkomplexe wie z.B. Zinkethylhexanoat,
- Mastikationshilfsmittel
   und
- Prozesshilfsmittel, wie insbesondere Fettsäureester und Metallseifen, wie z.B. Zinkseifen und/oder Calciumseifen
umfassen.

Bevorzugt ist ein Verfahren wie vorstehend beschrieben oder wie vorstehend als bevorzugt beschrieben, wobei das Transferieren in Schritt B) und/oder Schritt E) mittels einer Fördereinheit zum Befördern von Kautschukmischungsbestandteilen durchgeführt wird.
im Rahmen der vorliegenden Erfindung werden die Ausdrücke "Fördereinheit" oder "Fördermittel" synonym verwendet und umfassen insbesondere Förderbänder.

Ein Vorteil des vorstehend beschriebenen Aspekts der vorliegenden Erfindung ist, dass die Fördergeschwindigkeit des Förderbandes an die nötige Erwärmung seit für ein Kautschukmischungsbestandteil angepasst werden kann, so dass jedes Kautschukmischungsbestandteilen auf die gewünschte Temperatur erwärmt werden kann. Dies gilt insbesondere in Kombination mit IR-Strahlern, insbesondere mit den vorstehend genannten IR-Strahlern.

Bevorzugt ist ein Verfahren wie vorstehend beschrieben oder wie vorstehend als bevorzugt beschrieben, wobei zeitlich vor dem Schritt B) das erste Kautschukmischungsbestandteil mittels Wärmestrahlung erwärmt wird, sodass das erste Kautschukmischungsbestandteil beim Transferieren in Schritt B) eine Temperatur von 30 °C oder höher aufweist, bevorzugt im Bereich von 30 °C bis 200 °C, besonders bevorzugt im Bereich von 70 °C bis 180 °C.

Ein Vorteil des vorstehend beschriebenen Aspekts der vorliegenden Erfindung ist, dass insbesondere erste auf die vorstehend beschriebenen Temperaturbereiche vorgewärmte Kautschukmischungsbestandteile sich besonders gut mit zweiten Kautschukmischungsbestandteilen wie vorstehend oder nachstehend beschrieben vermischen lassen.

Bevorzugt ist ein Verfahren wie vorstehend beschrieben oder wie vorstehend als bevorzugt beschrieben, wobei die Obergrenze des Temperaturbereich T₂ der Temperatur T₁ der in Schritt D) erwärmten Kautschukmischung entspricht und die Untergrenze des Temperaturbereich T₂ 5°C unter der Temperatur T₁ der in Schritt D) erwärmten Kautschukmischung liegt, wobei bevorzugt die Temperatur des in Schritt D) erwärmten zweiten Kautschukmischungsbestandteils bis zum Transferieren in Schritt E) innerhalb des Temperaturbereiches T₂ liegt.

Ein Vorteil des vorstehend beschriebenen Aspekts der vorliegenden Erfindung ist, dass durch das Verhindern eines Abkühlens des zweiten Kautschukmischungsbestandteils von über 5 °C der erfindungsgemäße Effekt noch weiter erhöht wird. Gleiches gilt für die nachstehend beschriebenen Temperaturbereiche des Temperaturbereiches T₂.

Bevorzugt ist ein Verfahren wie vorstehend beschrieben oder wie vorstehend als bevorzugt beschrieben, wobei der Temperaturbereich T₂ im Bereich von 30 °C oder höher liegt, bevorzugt im Bereich von 30 °C bis 200 °C liegt, besonders bevorzugt im Bereich von 70 °C bis 180 °C liegt.

Bevorzugt ist ein Verfahren wie vorstehend beschrieben oder wie vorstehend als bevorzugt beschrieben, wobei das Mischen in Schritt C) so erfolgt, sodass die Mooney-Viskosität (ML+3, 100°C) der Kautschukmischungsbestandteile um mindestens 3 MU im Vergleich zur in Schritt B) aufgewiesenen Mooney-Viskosität erhöht wird.

Ein Vorteil des vorstehend beschriebenen Aspekts der vorliegenden Erfindung ist, dass auf diese Weise auch das erste Kautschukmischungsbestandteile erwärmt werden kann, bevor es mit dem zweiten Kautschukmischungsbestandteilen gemischt wird, und somit das Vermischen des ersten Kautschukmischungsbestandteilen mit dem zweiten Kautschukmischungsbestandteilen verbessert wird.

Bevorzugt ist ein Verfahren wie vorstehend beschrieben oder wie vorstehend als bevorzugt beschrieben, wobei der in Schritt A) her- oder bereitgestellten erste Kautschukmischungsbestandteil ein, mehrere oder sämtliche Kautschukbestandteile umfasst ausgesucht aus der Gruppe bestehend aus Naturkautschuk (NR), synthetischer Kautschuk (IR) und Styrol-Butadien-Kautschuk (SBR).

Ein Vorteil des vorstehend beschriebenen Aspekts der vorliegenden Erfindung ist, dass die vorstehend beschriebenen Kautschukbestandteile einen erfindungsgemäßen Effekt in einem erfindungsgemäßen Verfahren stärker aufweisen als andere Kautschukarten.

Bevorzugt ist ein Verfahren wie vorstehend beschrieben oder wie vorstehend als bevorzugt beschrieben, wobei die in Schritt A) her- oder bereitgestellten Kautschukmischungsbestandteile zumindest einen ersten und ein zweiten Kautschukbestandteil umfassen, wobei bevorzugt das erste Kautschukbestandteil eine Mooney-Viskosität (ML+3, 100°C) im Bereich von 10 bis 150 MU aufweist und das zweite Kautschukbestandteil eine Mooney-Viskosität (ML+3, 100°C) im Bereich von 50 bis 150 MU aufweist, wobei besonders bevorzugt das erste Kautschukbestandteil in dem ersten Kautschukmischungsbestandteil und das zweite Kautschukbestandteil in dem zweiten Kautschukmischungsbestandteil vorliegt.

Ein Vorteil des vorstehend beschriebenen Aspekts der vorliegenden Erfindung ist, dass insbesondere die vorstehend beschriebenen Kautschukbestandteile sich in einem erfindungsgemäßen Verfahren deutlich schneller vermischen lassen als in bekannten Verfahren.

Bevorzugt ist ein Verfahren wie vorstehend beschrieben oder wie vorstehend als bevorzugt beschrieben, wobei der in Schritt A) her- oder bereitgestellte zweite Kautschukbestandteil
- mindestens einen, bevorzugt sämtliche, Kautschuke umfasst ausgesucht aus der Gruppe bestehend aus Naturkautschuk (NR), synthetischer Kautschuk (IR) und Styrol-Butadien-Kautschuk (SBR), Halobutylkautschuk, Polybutadien (BR), Butylkautschuk (IIR), Chloroprenkautschuk (CR) und Ethylen-Propylen-Dien-Kautschuk (EPDM), bevorzugt ausgesucht aus der Gruppe bestehend aus Naturkautschuk (NR), synthetischer Kautschuk (IR) und Styrol-Butadien-Kautschuk (SBR),
   oder
- eine Mischung umfassend mindestens Kautschuk und einen Füllstoff oder eine Mischung bestehend aus Kautschuk und einem Füllstoff ist, wobei der Gesamtgewichtsanteil an Füllstoffen in der besagten Mischung des ersten oder zweiten Kautschukbestandteils im Bereich von 5 Gew.-% bis 90 Gew.-% liegt.

Ein Vorteil des vorstehend beschriebenen Aspekts der vorliegenden Erfindung ist, dass die vorstehend spezifizierten Kautschukbestandteile einen erfindungsgemäßen Effekt in einem erfindungsgemäßen Verfahren stärker aufweisen als andere Kautschukarten.

Besonders bevorzugt ist ein Verfahren wie vorstehend beschrieben oder wie vorstehend als bevorzugt beschrieben, wobei der in Schritt A) her- oder bereitgestellte zweite Kautschukbestandteil
- aus mindestens einen Kautschuk besteht ausgesucht aus der Gruppe bestehend aus Naturkautschuk (NR), synthetischer Kautschuk (IR) und Styrol-Butadien-Kautschuk (SBR), Halobutylkautschuk, Polybutadien (BR), Butylkautschuk (IIR), Chloroprenkautschuk (CR), Ethylen-Propylen-Dien-Kautschuk (EPDM) und deren Mischungen,
- bevorzugt aus mindestens einen Kautschuk besteht ausgesucht aus der Gruppe bestehend aus Naturkautschuk (NR), synthetischer Kautschuk (IR), Styrol-Butadien-Kautschuk (SBR) und deren Mischungen.

Ein Vorteil des vorstehend beschriebenen Aspekts der vorliegenden Erfindung ist, dass die vorstehend beschriebenen Kautschukbestandteile einen erfindungsgemäßen Effekt in einem erfindungsgemäßen Verfahren stärker aufweisen als die vorstehend beschriebenen Kautschukbestandteile.

Bevorzugt ist ein Verfahren wie vorstehend beschrieben oder wie vorstehend als bevorzugt beschrieben, wobei in Schritt F) der erste und zweite Kautschukmischungsbestandteil in dem zweiten Mischer gemischt werden, nachdem das im ersten Mischer gemischte erste Kautschukbestandteil in den zweiten Mischer transferiert wurde, wobei der erste Mischer ein Obermischer eines Tandemmischer ist und der zweite Mischer der Untermischer des besagten Tandemmischers ist.

Ein Vorteil des vorstehend beschriebenen Aspekts der vorliegenden Erfindung wurde bereits vorstehend zu den Schritten F1) und F2) beschrieben.

Bevorzugt ist ein Verfahren wie vorstehend beschrieben oder wie vorstehend als bevorzugt beschrieben, wobei der in Schritt A) her- oder bereitgestellten zweite Kautschukmischungsbestandteil eine Mooney-Viskosität (ML+3, 100°C) im Bereich von 50 bis 150 MU und/oder eine Temperatur im Bereich von 10 °C bis 35 °C aufweist.

Ein Vorteil des vorstehend beschriebenen Aspekts der vorliegenden Erfindung ist, dass insbesondere für die vorstehend spezifizierten zweite Kautschukmischungsbestandteile wie vorstehend beschrieben ein erfindungsgemäßer Effekt des erfindungsgemäßen Verfahrens stärker vorliegt als bei Kautschukmischungsbestandteilen mit einer anderen Mooney-Viskosität.

Bevorzugt ist ein Verfahren wie vorstehend beschrieben oder wie vorstehend als bevorzugt beschrieben, wobei während des Mischens in Schritt C)
- der erste Kautschukmischungsbestandteil eine Temperatur von 60 °C oder höher aufweist, bevorzugt eine Temperatur im Bereich von 60 °C bis 220 °C, besonders bevorzugt eine Temperatur im Bereich von 80 °C bis 180 °C
   und/oder
- die Mooney-Viskosität (ML+3, 100°C) des ersten Kautschukmischungsbestandteils um mindestens 3 MU im Vergleich zur in Schritt B) aufgewiesenen Mooney-Viskosität verringert wird.

Ein Vorteil des vorstehend beschriebenen Aspekts der vorliegenden Erfindung ist, dass ein erfindungsgemäßer Effekt der vorliegenden Erfindung sich durch das Einstellen der vorstehenden Temperaturen oder der vorstehenden Mooney-Viskosität des ersten Kautschukmischung Bestandteil einstellen lässt. Dieser erfindungsgemäße Effekt ist hierbei eine bessere Vermischung des ersten Kautschukmischungsbestandteil mit dem zweiten Kautschukmischungsbestandteil.

In besonders hohem Maße bevorzugt ist ein Verfahren wie vorstehend beschrieben, umfassend die folgenden Schritte:
A) Bereitstellen oder Herstellen von Kautschukmischungsbestandteilen, wobei die Kautschukmischungsbestandteile zumindest ein erstes und ein zweites Kautschukmischungsbestandteil aufweisen,
B) Transferieren zumindest des in Schritt A) her- oder bereitgestellten ersten Kautschukmischungsbestandteils in einen ersten Mischer zum Herstellen einer Kautschukmischung,
C) Mischen des in Schritt B) in den ersten Mischer transferierten ersten Kautschukmischungsbestandteils,
D) Erwärmen des in Schritt A) her- oder bereitgestellten zweiten Kautschukmischungsbestandteils mittels Wärmestrahlung, sodass das zweite Kautschukmischungsbestandteil eine Temperatur T₁ im Bereich von 40 °C bis 200 °C aufweist,
E) Transferieren des in Schritt D) erwärmten zweiten Kautschukmischungsbestandteils mit einer Temperatur im Temperaturbereich T₂ in einen zweiten Mischer zum Herstellen einer Kautschukmischung
   und
F) Mischen des in Schritt E) transferierten zweiten Kautschukmischungsbestandteils mit zumindest dem ersten Kautschukmischungsbestandteil in dem zweiten Mischer, nachdem das im ersten Mischer gemischte erste Kautschukbestandteil in den zweiten Mischer transferiert wurde, sodass eine Kautschukmischung resultiert, wobei
   - das Erwärmen in Schritt C) mittels eines IR-Strahlers durchgeführt wird,
   - der erste Mischer über dem zweiten Mischer übereinander angeordnet ist und beide Mischer so einen Tandemmischer bilden,
   - in Schritt F) das erste und das zweite Kautschukmischungsbestandteile mit zusätzlichen und mit den weiteren Kautschukmischungsbestandteilen gemischt wird,
   - der Temperaturbereich T₂ im Bereich von 70 °C bis 180 °C liegt,
      und
   - der in Schritt A) her- oder bereitgestellten zweite Kautschukmischungsbestandteil eine Mooney-Viskosität (ML+3, 100°C) im Bereich von 50 bis 150 MU und eine Temperatur im Bereich von 10 °C bis 35 °C aufweisen.

Die vorstehend beschriebenen vorteilhaften Aspekte eines erfindungsgemäßen Verfahrens zum Herstellen einer Kautschukmischung gelten auch für sämtliche Aspekte einer nachstehend beschriebenen Vorrichtung und die nachstehend diskutierten vorteilhaften Aspekte erfindungsgemäßer Vorrichtungen gelten entsprechend für sämtliche Aspekte eines erfindungsgemäßen Verfahrens zum Herstellen einer Kautschukmischung.

Die Erfindung betrifft auch eine Vorrichtung nach Anspruch 13 zur Durchführung des erfindungsgemässenVerfahrens, umfassend
- mindestens einen Mischer zur Herstellung einer Kautschukmischung,
   und
- Temperiermittel zum Erwärmen von Kautschukmischungsbestandteilen mittels Wärmestrahlung, beispielsweise einen IR-Strahler, wobei die Temperiermittel so angeordnet sind, dass sie die Kautschukmischungsbestandteilen zeitlich vor dem Hinzufügen in den Mischer erwärmen.

Bevorzugt ist eine Vorrichtung wie vorstehend beschrieben oder wie vorstehend als bevorzugt beschrieben, wobei der Mischer mindestens ein Fördermittel zum Befördern von Kautschukmischungsbestandteilen in den Mischer aufweist.

Ein Vorteil des vorstehend beschriebenen Aspekts der vorliegenden Erfindung ist vorstehend bereits zu der Fördereinheit beschrieben.

Bevorzugt ist eine Vorrichtung wie vorstehend beschrieben oder wie vorstehend als bevorzugt beschrieben, wobei die Vorrichtung einen Tandemmischer mit einem Obermischer und mit einem Untermischer sowie Fördermittel umfasst, wobei bevorzugt mindestens eins der Fördermittel geeignet ist, Kautschukmischungsbestandteilen in den Untermischer zu befördern, und die Temperiermittel dazu eingerichtet sind, auf dem einen Fördermittel geförderte Kautschukmischungsbestandteile mittels Wärmestrahlung, beispielsweise mittels Wärmestrahlung eines IR-Strahlers, zu erwärmen.

Ein Vorteil des vorstehend beschriebenen Aspekts der vorliegenden Erfindung ist, dass insbesondere im zweiten Mischer zugegebene Kautschukmischungsbestandteile eine größere Temperatur- und/oder Mooney-Viskositätsdifferenz als die bereits vorgemischten ersten Kautschukmischungsbestandteile, welche in den zweiten Mischer transferiert wurden, aufweisen. Hierdurch kann insbesondere dieses bei Tandemmischer häufig auftretende Problem mit einem erfindungsgemäßen verfahren gelöst werden.

Die Erfindung betrifft auch eine Verwendung von Wärmestrahlung nach Anspruch 15 zum Erwärmen von Kautschukmischungsbestandteilen in einem erfindungsgemässen Verfahren beziehungsweise in einer erfindungsgemässen Vorrichtung, wobei das Erwärmen der Kautschukmischungsbestandteile mittels Wärmestrahlung
- unmittelbar vor dem Hinzugeben in einen Mischer zum Herstellen einer Kautschukmischung
   und/oder
- mittels geeigneter Temperiermittel, beispielsweise eines IR-Strahlers, durchgeführt wird.

## Patentansprüche

1. Verfahren zum Herstellen einer Kautschukmischung, umfassend die folgenden Schritte:
A) Bereitstellen oder Herstellen von Kautschukmischungsbestandteilen, wobei die Kautschukmischungsbestandteile zumindest ein erstes und ein zweites Kautschukmischungsbestandteil aufweisen,
B) Transferieren zumindest des in Schritt A) her- oder bereitgestellten ersten Kautschukmischungsbestandteils in einen ersten Mischer zum Herstellen einer Kautschukmischung,
C) Mischen des in Schritt B) in den ersten Mischer transferierten ersten Kautschukmischungsbestandteils,
D) Erwärmen des in Schritt A) her- oder bereitgestellten zweiten Kautschukmischungsbestandteils mittels Wärmestrahlung, sodass das zweite Kautschukmischungsbestandteil eine Temperatur T₁ im Bereich von 40 °C bis 200 °C aufweist,
E) Transferieren des in Schritt D) erwärmten zweiten Kautschukmischungsbestandteils mit einer Temperatur im Temperaturbereich T₂ oberhalb von 25°C in den ersten Mischer oder in einen zweiten Mischer zum Herstellen einer Kautschukmischung
und
F) Mischen des in Schritt E) transferierten zweiten Kautschukmischungsbestandteils mit zumindest dem ersten Kautschukmischungsbestandteil
- in dem ersten Mischer
oder
- in dem zweiten Mischer, nachdem das im ersten Mischer gemischte erste Kautschukbestandteil in den zweiten Mischer transferiert wurde,
sodass eine Kautschukmischung resultiert.

2. Verfahren nach Anspruch 1, wobei die Wärmestrahlung Strahlung in einem Wellenlängenbereich von 700 nm bis 50 000 nm ist, bevorzugt in einem Wellenlängenbereich von 1000 nm bis 10 000 nm.

3. Verfahren nach einem der vorangehenden Ansprüche, wobei das in Schritt B) transferierte erste Kautschukmischungsbestandteil eine Temperatur im Bereich von 10 °C bis 35 °C aufweist und/oder eine Mooney-Viskosität (ML+3, 100°C) im Bereich von 5 bis 150 MU aufweist, bevorzugt im Bereich von 50 bis 120 MU.

4. Verfahren nach einem der vorangehenden Ansprüche, wobei der Temperaturbereich T₂ in Schritt D) so gewählt wird, dass das zweite Kautschukmischungsbestandteil beim Mischen in Schritt F) eine Mooney-Viskosität aufweist, welche nicht um mehr als 20 MU von der Mooney-Viskosität (ML1+3, 100°C) des ersten bereits gemischten Kautschukmischungsbestandteils in Schritt F) abweicht, bevorzugt nicht um mehr als 10 MU von der Mooney-Viskosität (ML1+3, 100°C) des ersten bereits gemischten Kautschukmischungsbestandteils in Schritt F) abweicht, besonders bevorzugt nicht um mehr als 5 MU von der Mooney-Viskosität (ML 1 +3, 100°C) des ersten bereits gemischten Kautschukmischungsbestandteils in Schritt F) abweicht.

5. Verfahren nach einem der vorangehenden Ansprüche, wobei in Schritt C) das erste Kautschukmischungsbestandteil mit weiteren Kautschukmischungsbestandteilen gemischt wird und/oder in Schritt F) das erste und das zweite Kautschukmischungsbestandteile mit zusätzlichen und/oder mit den weiteren Kautschukmischungsbestandteilen gemischt wird.

6. Verfahren nach einem der vorangehenden Ansprüche, wobei zeitlich vor dem Schritt B) das erste Kautschukmischungsbestandteil mittels Wärmestrahlung erwärmt wird, sodass das erste Kautschukmischungsbestandteil beim Transferieren in Schritt B) eine Temperatur von 30 °C oder höher aufweist, bevorzugt im Bereich von 30 °C bis 200 °C, besonders bevorzugt im Bereich von 70 °C bis 180 °C.

7. Verfahren nach einem der vorangehenden Ansprüche, wobei
- die Obergrenze des Temperaturbereich T₂ der Temperatur T₁ der in Schritt D) erwärmten Kautschukmischung entspricht und die Untergrenze des Temperaturbereich T₂ 5°C unter der Temperatur T₁ der in Schritt D) erwärmten Kautschukmischung liegt, wobei bevorzugt die Temperatur des in Schritt D) erwärmten zweiten Kautschukmischungsbestandteils bis zum Transferieren in Schritt E) innerhalb des Temperaturbereiches T₂ liegt,
oder
- der Temperaturbereich T₂ im Bereich von 30 °C oder höher liegt, bevorzugt im Bereich von 30 °C bis 200 °C liegt, besonders bevorzugt im Bereich von 70 °C bis 180 °C liegt.

8. Verfahren nach einem der vorangehenden Ansprüche, wobei das Mischen in Schritt C) so erfolgt, sodass die Mooney-Viskosität (ML+3, 100°C) des ersten Kautschukmischungsbestandteils um mindestens 3 MU im Vergleich zur in Schritt B) aufgewiesenen Mooney-Viskosität des ersten Kautschukmischungsbestandteils erhöht wird.

9. Verfahren nach einem der vorangehenden Ansprüche, wobei der in Schritt A) her- oder bereitgestellten erste Kautschukmischungsbestandteil einen, mehrere oder sämtliche Kautschuke umfasst oder aus einem oder mehreren Kautschuken besteht, wobei die Kautschuke bevorzugt ausgesucht sind aus der Gruppe bestehend aus Naturkautschuk (NR), synthetischer Kautschuk (IR) und Styrol-Butadien-Kautschuk (SBR).

10. Verfahren nach einem der vorangehenden Ansprüche, wobei der in Schritt A) her- oder bereitgestellte zweite Kautschukbestandteil
- mindestens einen, bevorzugt sämtliche, Kautschuke umfasst ausgesucht aus der Gruppe bestehend aus Naturkautschuk (NR), synthetischer Kautschuk (IR) und Styrol-Butadien-Kautschuk (SBR), Halobutylkautschuk, Polybutadien (BR), Butylkautschuk (IIR), Chloroprenkautschuk (CR) und Ethylen-Propylen-Dien-Kautschuk (EPDM), bevorzugt ausgesucht aus der Gruppe bestehend aus Naturkautschuk (NR), synthetischer Kautschuk (IR) und Styrol-Butadien-Kautschuk (SBR),
oder
- eine Mischung umfassend mindestens einen Kautschuk und mindestens einen Füllstoff ist, wobei der Gesamtgewichtsanteil an Füllstoffen in der besagten Mischung des ersten oder zweiten Kautschukbestandteils im Bereich von 5 Gew.-% bis 90 Gew.-% liegt,
oder
- eine Mischung bestehend aus Kautschuk und Füllstoff ist, wobei der Gesamtgewichtsanteil an Füllstoffen in der besagten Mischung des ersten oder zweiten Kautschukbestandteils im Bereich von 5 Gew.-% bis 90 Gew.-% liegt.

11. Verfahren nach einem der vorangehenden Ansprüche, wobei der in Schritt A) her- oder bereitgestellten zweite Kautschukmischungsbestandteil eine Mooney-Viskosität (ML+3, 100°C) im Bereich von 50 bis 150 MU und/oder eine Temperatur im Bereich von 10 °C bis 35 °C aufweist.

12. Verfahren nach einem der vorangehenden Ansprüche, wobei während des Mischens in Schritt C)
- der erste Kautschukmischungsbestandteil eine Temperatur von 60 °C oder höher aufweist, bevorzugt eine Temperatur im Bereich von 60 °C bis 220 °C, besonders bevorzugt eine Temperatur im Bereich von 80 °C bis 180 °C
und/oder
- die Mooney-Viskosität (ML+3, 100°C) des ersten Kautschukmischungsbestandteils um mindestens 3 MU im Vergleich zur in Schritt B) aufgewiesenen Mooney-Viskosität verringert wird.

13. Vorrichtung zur Durchführung eines Verfahrens nach einem der vorangehenden Ansprüche, umfassend
- mindestens einen Mischer,
und
- Temperiermittel zum Erwärmen von Kautschukmischungsbestandteilen mittels Wärmestrahlung, beispielsweise einen IR-Strahler, wobei die Temperiermittel so angeordnet sind, dass sie die Kautschukmischungsbestandteilen zeitlich vor dem Hinzufügen in den Mischer erwärmen können.

14. Vorrichtung nach Anspruch 13, wobei die Vorrichtung einen Tandemmischer mit einem Obermischer und mit einem Untermischer sowie Fördermittel umfasst, wobei bevorzugt mindestens eins der Fördermittel geeignet ist, Kautschukmischungsbestandteilen in den Untermischer zu befördern, und die Temperiermittel dazu eingerichtet sind, auf dem einen Fördermittel geförderte Kautschukmischungsbestandteile mittels Wärmestrahlung, beispielsweise mittels Wärmestrahlung eines IR-Strahlers, zu erwärmen.

15. Verwendung von Wärmestrahlung in einem Verfahren nach einem der Ansprüche 1 bis 12 beziehungsweise in einer Vorrichtung nach Anspruch 13 oder 14 zum Erwärmen von Kautschukmischungsbestandteilen, wobei das Erwärmen der Kautschukmischungsbestandteile mittels Wärmestrahlung
- unmittelbar vor dem Hinzugeben in einen Mischer zum Herstellen einer Kautschukmischung
und/oder
- mittels geeigneter Temperiermittel, beispielsweise eines IR-Strahlers, durchgeführt wird.

## Claims

1. Process for producing a rubber mixture, comprising the following steps of:
A) providing or producing rubber mixture constituents, wherein the rubber mixture constituents comprise at least a first and a second rubber mixture constituent,
B) transferring at least the first rubber mixture constituent produced or provided in step A) into a first mixer for producing a rubber mixture,
C) mixing the first rubber mixture constituent transferred into the first mixer in step B),
D) heating the second rubber mixture constituent produced or provided in step A) using thermal radiation so that the second rubber mixture constituent has a temperature T₁ in the range from 40°C to 200°C,
E) transferring the second rubber mixture constituent heated in step D) with a temperature in the temperature range T₂ above 25°C into the first mixer or into a second mixer for producing a rubber mixture
and
F) mixing the second rubber mixture constituent transferred in step E) with at least the first rubber mixture constituent
- in the first mixer
or
- in the second mixer after the first rubber constituent mixed in the first mixer has been transferred into the second mixer,
to afford a rubber mixture.

2. Process according to Claim 1, wherein the thermal radiation is radiation in a wavelength range from 700 nm to 50 000 nm, preferably in a wavelength range from 1000 nm to 10 000 nm.

3. Process according to either of the preceding claims, wherein the first rubber mixture constituent transferred in step B) has a temperature in the range from 10°C to 35°C and/or has a Mooney viscosity (ML+3, 100°C) in the range from 5 to 150 MU, preferably in the range from 50 to 120 MU.

4. Process according to any of the preceding claims, wherein the temperature range T₂ in step D) is selected such that during mixing in step F) the second rubber mixture constituent has a Mooney viscosity which diverges from the Mooney viscosity (ML1+3, 100°C) of the first already mixed rubber mixture constituent in step F) not by more than 20 MU, preferably diverges from the Mooney viscosity (ML1+3, 100°C) of the first already mixed rubber mixture constituent in step F) not by more than 10 MU, particularly preferably diverges from the Mooney viscosity (ML1+3, 100°C) of the first already mixed rubber mixture constituent in step F) not by more than 5 MU.

5. Process according to any of the preceding claims, wherein in step C) the first rubber mixture constituent is mixed with further rubber mixture constituents and/or in step F) the first and the second rubber mixture constituents are mixed with additional and/or with the further rubber mixture constituents.

6. Process according to any of the preceding claims, wherein prior to step B) the first rubber mixture constituent is heated using thermal radiation so that during the transferring in step B) the first rubber mixture constituent has a temperature of 30°C or higher, preferably in the range from 30°C to 200°C, particularly preferably in the range from 70°C to 180°C.

7. Process according to any of the preceding claims, wherein
- the upper limit of the temperature range T₂ corresponds to the temperature T₁ of the rubber mixture heated in step D) and the lower limit of the temperature range T₂ is 5°C below the temperature T₁ of the rubber mixture heated in step D), wherein preferably the temperature of the second rubber mixture constituent heated in step D) is within the temperature range T₂ until the transferring in step E),
or
- the temperature range T₂ is in the range of 30°C or higher, preferably is in the range from 30°C to 200°C, particularly preferably is in the range from 70°C to 180°C.

8. Process according to any of the preceding claims, wherein the mixing in step C) is carried out such that the Mooney viscosity (ML+3, 100°C) of the first rubber mixture constituent is increased by at least 3 MU relative to the Mooney viscosity of the first rubber mixture constituent exhibited in step B).

9. Process according to any of the preceding claims, wherein the first rubber mixture constituent produced or provided in step A) comprises one, more or all rubbers or consists of one or more rubbers, wherein the rubbers are preferably selected from the group consisting of natural rubber (NR), synthetic rubber (IR) and styrene-butadiene rubber (SBR).

10. Process according to any of the preceding claims, wherein the second rubber constituent produced or provided in step A)
- comprises at least one, preferably all, rubbers selected from the group consisting of natural rubber (NR), synthetic rubber (IR) and styrene-butadiene rubber (SBR), halobutyl rubber, polybutadiene (BR), butyl rubber (IIR), chloroprene rubber (CR) and ethylene-propylene-diene rubber (EPDM), preferably selected from the group consisting of natural rubber (NR), synthetic rubber (IR) and styrene-butadiene rubber (SBR),
or
- is a mixture comprising at least one rubber and at least one filler, wherein the total weight fraction of fillers in said mixture of the first or second rubber constituent is in the range from 5% by weight to 90% by weight,
or
- is a mixture consisting of rubber and filler, wherein the total weight fraction of fillers in said mixture of the first or second rubber constituent is in the range from 5% by weight to 90% by weight.

11. Process according to any of the preceding claims, wherein the second rubber mixture constituent produced or provided in step A) has a Mooney viscosity (ML+3, 100°C) in the range from 50 to 150 MU and/or a temperature in the range from 10°C to 35°C.

12. Process according to any of the preceding claims, wherein during the mixing in step C)
- the first rubber mixture constituent has a temperature of 60°C or higher, preferably a temperature in the range from 60°C to 220°C, particularly preferably a temperature in the range from 80°C to 180°C
and/or
- the Mooney viscosity (ML+3, 100°C) of the first rubber mixture constituent is reduced by at least 3 MU relative to the Mooney viscosity exhibited in step B).

13. Apparatus for performing a process according to any of the preceding claims, comprising
- at least one mixer
and
- heating means for heating rubber mixture constituents using thermal radiation, for example an IR emitter, wherein the heating means are arranged such that they can heat the rubber mixture constituents prior to the adding into the mixer.

14. Apparatus according to Claim 13, wherein the apparatus comprises a tandem mixer having an upper mixer and having a lower mixer and conveying means, wherein preferably at least one of the conveying means is suitable for conveying rubber mixture constituents into the lower mixer and the heating means are adapted for heating rubber mixture constituents conveyed on the one conveying means using thermal radiation, for example using thermal radiation from an IR emitter.

15. Use of thermal radiation in a process according to any of Claims 1 to 12 or in an apparatus according to Claim 13 or 14 for heating rubber mixture constituents, wherein the heating of the rubber mixture constituents using thermal radiation is performed
- immediately prior to the adding into a mixer for producing a rubber mixture
and/or
- using suitable heating means, for example an IR emitter.

## Revendications

1. Procédé pour la production d'un mélange de caoutchoucs, comprenant les étapes suivantes :
A) fourniture ou préparation de composants de mélange de caoutchoucs, les composants de mélange de caoutchoucs comportant au moins un premier et un deuxième composant de mélange de caoutchoucs,
B) transfert au moins du premier composant de mélange de caoutchoucs préparé ou fourni dans l'étape A) dans un premier mélangeur destiné à la préparation d'un mélange de caoutchoucs,
C) mélangeage du premier composant de mélange de caoutchoucs transféré dans le premier mélangeur dans l'étape B),
D) chauffage par rayonnement thermique du deuxième composant de mélange de caoutchoucs préparé ou fourni dans l'étape A), de manière que le deuxième composant de mélange de caoutchoucs présente une température T₁ dans la plage de 40 °C à 200 °C,
E) transfert du deuxième composant de mélange de caoutchoucs chauffé dans l'étape D), à une température dans la plage de température T₂ au-dessus de 25 °C, dans le premier mélangeur ou dans un deuxième mélangeur destiné à la préparation d'un mélange de caoutchoucs,
et
F) mélangeage du deuxième composant de mélange de caoutchoucs transféré dans l'étape E), avec au moins le premier composant de mélange de caoutchoucs
- dans le premier mélangeur
ou
- dans le deuxième mélangeur, après que le premier composant de caoutchoucs mélangé dans le premier mélangeur a été transféré dans le deuxième mélangeur,
de sorte qu'il en résulte un mélange de caoutchoucs.

2. Procédé selon la revendication 1, dans lequel le rayonnement thermique est dans une plage de longueurs d'onde de 700 nm à 50 000 nm, de préférence dans une plage de longueurs d'onde de 1 000 nm à 10 000 nm.

3. Procédé selon l'une quelconque des revendications précédentes, dans lequel le premier composant de mélange de caoutchoucs transféré dans l'étape B) présente une température dans la plage de 10 °C à 35 °C et/ou une consistance Mooney (ML+3, 100 °C) dans la plage de 5 à 150 MU, de préférence dans la plage de 50 à 120 MU.

4. Procédé selon l'une quelconque des revendications précédentes, dans lequel la plage de température T₂ dans l'étape D) est choisie de telle façon que le deuxième composant de mélange de caoutchoucs présente lors du mélangeage dans l'étape F) une consistance Mooney qui ne diffère pas dans l'étape F) de plus de 20 MU de la consistance Mooney (ML1+3, 100 °C) du premier composant de mélange de caoutchoucs déjà mélangé, de préférence ne diffère pas dans l'étape F) de plus de 10 MU de la consistance Mooney (ML1+3, 100 °C du premier composant de mélange de caoutchoucs déjà mélangé, de façon particulièrement préférée ne diffère pas dans l'étape F) de plus de 5 MU de la consistance Mooney (ML1+3, 100 °C) du premier composant de mélange de caoutchoucs déjà mélangé.

5. Procédé selon l'une quelconque des revendications précédentes, dans lequel dans l'étape C) le premier composant de mélange de caoutchoucs est mélangé avec d'autres composants de mélange de caoutchoucs et/ou dans l'étape F) les premier et deuxième composants de mélange de caoutchoucs sont mélangés avec les autres composants de mélange de caoutchoucs et/ou avec des composants supplémentaires de mélange de caoutchoucs.

6. Procédé selon l'une quelconque des revendications précédentes, dans lequel chronologiquement avant l'étape B) le premier composant de mélange de caoutchoucs est chauffé par rayonnement thermique, de sorte que le premier composant de mélange de caoutchoucs présente lors du transfert dans l'étape B) une température de 30 °C ou au-dessus, de préférence dans la plage de 30 °C à 200 °C, de façon particulièrement préférée dans la plage de 70 °C à 180 °C.

7. Procédé selon l'une quelconque des revendications précédentes, dans lequel
- la limite supérieure de la plage de température T₂ correspond à la température T₁ du mélange de caoutchoucs chauffé dans l'étape D) et la limite inférieure de la plage de température T₂ se situe au-dessous de la température T₁ du mélange de caoutchoucs chauffé dans l'étape D), de préférence la température du deuxième composant de mélange de caoutchoucs chauffé dans l'étape D) se situe à l'intérieur de la plage de température T₂ jusqu'au transfert dans l'étape E),
ou
- la plage de température T₂ se situe dans la plage de 30 °C ou au-dessus, de préférence se situe dans la plage de 30 °C à 200 °C, de façon particulièrement préférée se situe dans la plage de 70 °C à 180 °C.

8. Procédé selon l'une quelconque des revendications précédentes, dans lequel le mélangeage dans l'étape C) s'effectue de telle façon que la consistance Mooney (ML+3, 100 °C) du premier composant de mélange de caoutchoucs est augmentée d'au moins 3 MU en comparaison de la consistance Mooney manifestée dans l'étape B) du premier composant de mélange de caoutchoucs.

9. Procédé selon l'une quelconque des revendications précédentes, dans lequel le premier composant de mélange de caoutchoucs préparé ou fourni dans l'étape A) comprend un, plusieurs ou tous les caoutchoucs ou consiste en un ou plusieurs caoutchoucs, les caoutchoucs étant de préférence choisis dans le groupe constitué par le caoutchouc naturel (NR), le caoutchouc synthétique (IR) et le caoutchouc styrène-butadiène (SBR).

10. Procédé selon l'une quelconque des revendications précédentes, dans lequel le deuxième composant de caoutchouc préparé ou fourni dans l'étape A)
- comprend au moins un, de préférence tous les caoutchoucs choisis dans le groupe constitué par le caoutchouc naturel (NR), le caoutchouc synthétique (IR) et le caoutchouc styrène-butadiène (SBR), le caoutchouc halobutyle, le polybutadiène (BR), le caoutchouc butyle (IIR), le caoutchouc chloroprène (CR) et le caoutchouc éthylène-propylène-diène (EPDM), de préférence choisis dans le groupe constitué par le caoutchouc naturel (NR), le caoutchouc synthétique (IR) et le caoutchouc styrène-butadiène (SBR),
ou
- est un mélange comprenant au moins un caoutchouc et au moins une charge, la proportion totale en poids de charges dans ledit mélange du premier ou deuxième composant de caoutchouc se situant dans la plage de 5 % en poids à 90 % en poids,
ou
- est un mélange constitué de caoutchouc et charge, la proportion totale en poids de charges dans ledit mélange du premier ou deuxième composant de caoutchouc se situant dans la plage de 5 % en poids à 90 % en poids.

11. Procédé selon l'une quelconque des revendications précédentes, dans lequel le deuxième composant de mélange de caoutchoucs préparé ou fourni dans l'étape A) présente une consistance Mooney (ML+3, 100 °C) dans la plage de 50 à 150 MU et/ou une température dans la plage de 10 °C à 35 °C.

12. Procédé selon l'une quelconque des revendications précédentes, dans lequel pendant le mélangeage dans l'étape C)
- le premier composant de mélange de caoutchoucs présente une température de 60 °C ou au-dessus, de préférence une température dans la plage de 60 °C à 220 °C, de façon particulièrement préférée une température dans la plage de 80 °C à 180 °C
et/ou
- la consistance Mooney (ML+3, 100 °C) du premier composant de mélange de caoutchoucs est abaissée d'au moins 3 MU en comparaison de la consistance Mooney manifestée dans l'étape B).

13. Dispositif destiné à l'excéution d'un procédé selon l'une quelconque des revendications précédentes, comprenant
- au moins un mélangeur,
et
- des moyens de traitement thermique destinés au chauffage de composants de mélange de caoutchoucs par rayonnement thermique, par exemple par un émetteur infrarouge, les moyens de traitement thermique étant disposés de telle façon qu'ils peuvent chauffer les composants de mélange de caoutchoucs chronologiquement avant l'introduction dans le mélangeur.

14. Dispositif selon la revendication 13, dans lequel le dispositif comprend un mélangeur en tandem comportant un mélangeur supérieur et comportant un mélangeur inférieur ainsi que des moyens d'acheminement, de préférence au moins l'un des moyens d'acheminement étant approprié pour acheminer des composants de mélange de caoutchoucs dans le mélangeur inférieur, et les moyens de traitement thermique étant conçus pour chauffer, par exemple par rayonnement thermique d'un émetteur infrarouge, des composants de mélange de caoutchoucs acheminés sur ledit un moyen d'acheminement.

15. Utilisation de rayonnement thermique dans un procédé selon l'une quelconque des revendications 1 à 12 ou, respectivement, dans un dispositif selon la revendication 13 ou 14, pour le chauffage de composants de mélange de caoutchoucs, le chauffage des composants de mélange de caoutchoucs étant effectué par rayonnement thermique
- immédiatement avant l'introduction dans un mélangeur destiné à la préparation d'un mélange de caoutchoucs
et/ou
par des moyens de traitement thermique appropriés, par exemple par un émetteur infrarouge.
